(19) Europäisches Patentamt
European Patent Office
Office européen des brevets

(11) Publication number: 0 124 989
B1

(12) EUROPEAN PATENT SPECIFICATION

(45) Date of publication of patent specification: 22.07.87

(51) Int. Cl.⁴: C 04 B 35/58

(21) Application number: 84302052.0

(22) Date of filing: 27.03.84

# (54) Silicon-nitride-sintered body.

(30) Priority: 31.03.83 JP 53528/83

(43) Date of publication of application:
14.11.84 Bulletin 84/46

(45) Publication of the grant of the patent:
22.07.87 Bulletin 87/30

(84) Designated Contracting States:
DE FR GB SE

(56) References cited:
US-A-3 991 148

JOURNAL OF THE AMERICAN CERAMIC SOCIETY, vol. 66, no. 6, June 1983, Columbus, Ohio (US); Z.H.HUANG et al.: "Formation of alpha-Si3N4 solidsolutions i n the system Si3N4-AlN-Y2O3", pp. C96-C97

(73) Proprietor: Kabushiki Kaisha Toshiba
72, Horikawa-cho Saiwai-ku
Kawasaki-shi Kanagawa-ken 210 (JP)

(72) Inventor: Komeya, Katsutoshi
2-2-14, Ishigamidai Ooiso-machi
Naka-gun Kanagawa-ken (JP)
Inventor: Komatsu, Michiyasu
203 Mitsutake-Heights 6162-18, Hino-cho
Konan-ku Yokohama-shi (JP)
Inventor: Tsuge, Akihiko
2-12-401, Wakabadai Asahi-ku
Yokohama-shi (JP)
Inventor: Inoue, Hiroshi
1086-5, Koyaba
Kawaguchi-shi Saitama-ken (JP)

(74) Representative: Freed, Arthur Woolf et al
MARKS & CLERK 57-60 Lincoln's Inn Fields
London WC2A 3LS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 124 989 B1

Courier Press, Leamington Spa, England.

**Description**

This invention relates to a silicon-nitride-sintered body improved in mechanical strength.

A silicon-nitride-sintered body ($Si_3N_4$) is excellent in heat resistance and is applied as the material for engine parts, for corrosion-resistant parts, and for parts resistant to abrasion and heat. A substance of $Si_3N_4$ alone presents difficulties in the sintering progress. Therefore, the $Si_3N_4$ substance is made into a dense sintered form by applying a sinter-promoting agent. This sinter-promoting agent includes oxides such as MgO and $Y_2O_3$ and mixtures of compounds such as MgO—$Al_2O_3$ and $Y_2O_3$—$Al_2O_3$. Hitherto, a $Si_3N_4$ sintered body possessing high density and excellent mechanical strength, toughness and thermal shock resistance has been developed by applying any of the above-mentioned sinter-promoting agents.

The known sintering method includes a hot press process, hot still-water press (HIP), sintering in compressed atmosphere and all purpose normal-pressure sintering. However, the conventional processes presented difficulties in producing a compact mass of $Si_3N_4$ by normal-pressure sintering.

Further, a $Si_3N_4$ sintered mass applicable as a mechanical component, for example, an engine part, must have superb reliability resulting from great mechanical strength at high temperatures, completely uniform quality and freedom from local weaknesses. However, $Si_3N_4$ sintered masses developed to date fails to satisfy the above-mentioned properties. Therefore, a demand exists for the manufacturing of a $Si_3N_4$ sintered mass with great mechanical strength and high reliability.

This invention has been accomplished in view of the above-mentioned circumstances and is intended to provide a sintered mass of silicon nitride having great mechanical strength and high reliability. Another object of the invention is to provide a sintered mass of silicon nitride having great mechanical strength at high temperatures and superbly adapted for use as, for example, an engine part.

To attain the above-mentioned object, this invention provides a silicon-nitride-sintered mass whose base is prepared from $Si_3N_4$-rare earth oxide-$Al_2O_3$-Al1N and whose constituent phases are represented by α'-$Si_3N_4$ and β-$Si_3N_4$, and wherein the volume ratio between both phases is set at 0.05—0.7:0.95—0.3.

The invention further provides a sintered mass as defined in that the constituent phases are α'-$Si_3N_4$, β-$Si_3N_4$ and a mass of Si-rare earth element-Al-O-N; the volume ratio of the α'-$Si_3N_4$ phase to the whole of all constituent phases being set at 0.01 to 0.07.

This invention can be more fully understood from the following detailed description when taken in conjunction with the accompanying drawings, in which:

Fig. 1 illustrates the diameter of crystal particles constituting a sintered mass of $Si_3N_4$ embodying this invention;

Fig. 2 is an X-ray diffraction chart of the subject $Si_3N_4$ sintered mass; and

Fig. 3 is another X-ray diffraction chart of the subject $Si_3N_4$ sintered mass.

The present inventors noticed that high mechanical strength of the $Si_3N_4$ sintered mass largely depends on the composition, and a $Si_3N_4$ sintered mass whose base is prepared from $Si_3N_4$-rare earth oxide (for example, $Y_2O_3$, $La_2O_3$)-$Al_2O_3$-AlN is particularly excellent in mechanical strength, and further discovered that the mechanical property of the subject $Si_3N_4$ sintered mass widely varies with the constituent phases. Generally, the crystal of $Si_3N_4$ includes two types of α and β, and other types of α' and β' in which other atoms and ions are present in the form of a solid solution. Namely, α'-$Si_3N_4$ is a type consisting of α-$Si_3N_4$ and a solid solution component of a rare earth element such as Y, La or Ce and O. β'-$Si_3N_4$ is a type known as a sialon. Therefore, the mechanical property of the $Si_3N_4$ sintered mass widely varies depending on a combination of the above-mentioned four types which constitutes the crystal of $Si_3N_4$.

The present inventors' studies have discovered that a sintered $Si_3N_4$ mass, whose crystal comprises α' and β phases and wherein said α' phase bears the specified ratio of 0.05 to 0.7 to the total of both phases α' and β, has extremely great mechanical strength as microscopically determined. It has further been found that a $Si_3N_4$ sintered mass whose crystal comprises the α'-$Si_3N_4$ phase, β-$Si_3N_4$ phases and a phase of Si-rare earth element-Al-O-N, wherein said α'-$Si_3N_4$ phase is chosen to bear a ratio of 0.01 to 0.7 to the total of all phases, possesses extremely great mechanical strength as microscopically determined.

The above-mentioned α'-$Si_3N_4$ phase comprises α-$Si_3N_4$ and a solid solution component (a rare earth element such as Y, La or Ce and O). The reason why the α'-$Si_3N_4$ phase bears a ratio defined within the aforementioned range to the total of all the constituent phases, arises from the fact that if the quantity of said α'-$Si_3N_4$ phase falls below the lower limit or rises above the upper limit, a silicon-nitride-sintered body can not fully attain great mechanical strength.

It is preferred that the crystals of the α'-$Si_3N_4$ phase and β-$Si_3N_4$ phase be comprised of narrow columnar particles and the lengthwise diameter of the crystal particle be less than 40 microns (μm) or preferably less than 20 microns. In this case, the aspect ratio (a/b shown in Fig. 1) bears great importance, and it is preferred that said ratio be larger than at least 2.

When a sintered $Si_3N_4$ mass is produced by normal pressure sintering, it is desired that the rare earth oxide bear a defined ratio of 3 to 10% by weight to the whole mass for the reason, that if the quantity of said rare earth oxide falls below 3% by weight, the elongated form of the crystal particle tends to be rendered imperfect in crystalline shape and decreases in density. Conversely if the quantity of said rare earth oxide rises above 10% by weight, the original property of the sintered silicon nitride mass is obstructed. When, however, the $Si_3N_4$ mass is sintered by applying external pressure as in the case of the hot press or HIP

process, the problem related to the density of the $SiN_4$ mass can be avoided. Therefore, the lower limit of the quantity of the rare earth oxide may be set at 2% by weight.

The above-mentioned phase of Si-rare earth element-Al-O-N (hereinafter referred to as "X") includes the following:

J ($Y_4Si_2O_7N_2$)
H ($Y_9Si_6O_{21}N_3$)
K ($YSiO_2N$)

As needs arise, it is possible to add at least one of the group consisting of $TiO_2$, MgO and $ZrO_2$ in a total amount of less than 5% by weight) to the phase of $Si_3N_4$-rare earth oxide-$Al_2O_3$-AlN.

Fig. 2 is an X-ray diffraction chart of a sintered mass of silicon nitride whose base is prepared from $Si_3N_4$-rare earth oxide-$Al_2O_3$-AlN, which comprises an α'-$Si_3N_4$ phase and β-$Si_3N_4$ phase; the ratio between both phases is set at 0.13: 0.87. Fig. 3 is an X-ray diffraction chart of a sintered mass of silicon nitride whose base is prepared from $Si_3N_4$-rare earth oxide-$Al_2O_3$-AlN, which comprises an α'-$Si_3N_4$ phase and β-$Si_3N_4$ phase; the α'-$Si_3N_4$ phase bears a ratio of 0.06 to the whole of the constituent phases.

Description may now be made of the method for manufacturing a sintered mass of $Si_3N_4$ embodying this invention.

A mass consisting of $Si_3N_4$-rare earth oxide-$Al_2O_3$-AlN is first provided as a raw material. The $Si_3N_4$ powder component of said raw material contains more than 65% of α-$Si_3N_4$ powder. The raw material is baked at a temperature of 1,700 to 1,800°C in nonoxidizing atmosphere (for example, $N_2$ atmosphere) to produce a sintered mass of $Si_3N_4$. When the content of the α-$Si_3N_4$ powder and the baking conditions are changed during the above-mentioned manufacturing step, it is possible to provide various $Si_3N_4$ sintered masses such as the following:

a mass which substantially consists of an α'-$Si_3N_4$ phase and β-$Si_3N_4$ phase alone; and

a mass which comprises not only the α'-$Si_3N_4$ phase and β-$Si_3N_4$ phase, but also a prominently observable phase consisting of Si-rare earth element-Al-O-N.

This invention will be better understood with reference to the following examples and controls shown in Table 1 below.

Examples 1—15

A raw material was produced by mixing $Si_3N_4$ powder having an average particle size of 1.2 micron and containing 92% by weight of α-$Si_3N_4$, high purity $Y_2O_3$ powder having an average particle size of 0.7 micron, high purity $Al_2O_3$ powder having an average particle size of 0.3 micron, and high purity AlN powder having an average particle size of 1.2 microns. For the manufacture of $Si_3N_4$ sintered masses comprising α'-$Si_3N_4$ and β-$Si_3N_4$ phases, mixtures comprising 1~10 weight % of $Y_2O_3$, 0.1~10 weight % of $Al_2O_3$, 0.3~13 weight % of AlN (ratio of AlN/$Al_2O_3$:3 or more) and balance of the $Si_3N_4$ were employed. On the other hand, for the manufacture of $Si_3N_4$ sintered masses comprising α'-$Si_3N_4$, β-$Si_3N_4$ and (Si-rare earth element-Al-O-N) phases, mixtures comprising 0.1~10 weight % of $Y_2O_3$, 0.1~5 weight % of $Al_2O_3$, 0.1~10 weight % of AlN (ratio of AlN/$Al_2O_3$:1 to 3.5 (preferably less than 3) and balance of the $Si_3N_4$ were employed. The mass was sintered at a temperature ranging from 1,600 to 1,800°C under the normal pressure by selecting various conditions, producing fifteen different $Si_3N_4$ sintered masses all having a composition of $Si_3N_4$-$Y_2O_3$-$Al_3O_3$-AlN and comprising the various phase listed in Table 1 below.

TABLE 1

| Tests | No. | Sintering density (%) | Constituent phases | | Mechanical strength of the test piece bent at 3 points [$kg/mm^2$ (MPa)] | | |
|---|---|---|---|---|---|---|---|
| | | | Kind | α' percentage | Normal temperature | 1,000°C | 1,200°C |
| Examples | 1 | 98.1 | α',β | 0.63 | 86 (840) | 87 (850) | 75 (735) |
| | 2 | 98.3 | α',β | 0.54 | 95 (930) | 89 (870) | 78 (765) |
| | 3 | 98.4 | α',β | 0.51 | 88 (860) | 87 (850) | 77 (755) |
| | 4 | 97.8 | α',β | 0.43 | 93 (910) | 91 (890) | 80 (780) |
| | 5 | 98.6 | α',β | 0.30 | 92 (900) | 93 (910) | 72 (710) |
| | 6 | 99.1 | α',β | 0.15 | 86 (840) | 84 (820) | 70 (690) |
| | 7 | 97.5 | α',β | 0.12 | 84 (820) | 86 (840) | 81 (790) |
| | 8 | 97.7 | α',β,x | 0.65 | 84 (820) | 82 (800) | 76 (745) |
| | 9 | 98.5 | α',β,x | 0.58 | 85 (830) | 80 (780) | 73 (720) |
| | 10 | 98.8 | α',β,x | 0.55 | 87 (850) | 75 (735) | 71 (700) |
| | 11 | 98.9 | α',β,x | 0.54 | 86 (840) | 83 (810) | 75 (735) |
| | 12 | 98.5 | α',β,x | 0.33 | 92 (900) | 85 (830) | 74 (725) |
| | 13 | 96.9 | α',β,x | 0.46 | 91 (890) | 86 (840) | 73 (720) |
| | 14 | 99.0 | α',β,x | 0.21 | 89 (870) | 82 (800) | 76 (745) |
| | 15 | 99.5 | α',β,x | 0.15 | 87 (850) | 83 (810) | 71 (700) |
| Controls | 1 | 98.5 | α',β | 0.81 | 72 (710) | 70 (690) | 67 (660) |
| | 2 | 97.5 | α',β | 0.02 | 92 (900) | 75 (735) | 42 (410) |
| | 3 | 98.8 | β,x | 0 | 87 (850) | 63 (620) | 56 (550) |
| | 4 | 98.7 | β | 0 | 85 (830) | 65 (640) | 45 (440) |
| | 5 | 98.4 | α',β,x | 0.78 | 66 (650) | 63 (620) | 68 (670) |

The fifteen different $Si_3N_4$ sintered masses were cut into a test piece measuring 3×3×30 mm. Determination was made of the mechanical strength of each test piece by bending it at three points with the span of the adjacent bending points set at 20 mm. The results of the test are also indicated in Table 1 above. Determination was also made in the same manner as described above of the mechanical strength of Controls 1, 2, 5 of $Si_3N_4$ masses, which had the same phases as the above-mentioned fifteen examples, but wherein the α'-$Si_3N_4$ phase indicated a different ratio to the β-$Si_3N_4$ phase from that observed in the fifteen examples. The results of testing said controls are also set forth in Table 1. Table 1 shows that the $Si_3N_4$ sintered masses embodying this invention exhibited extremely great mechanical strength as tested at normal and elevated temperatures. In contrast, it was found that controls 1, 2, 5, which had the same phases as the $Si_3N_4$ sintered masses of this invention but the ratio between the α'-$Si_3N_4$ phase and β-$Si_3N_4$ phase fell outside of the range defined with respect to the constituent phases of the $Si_3N_4$ sintered mass embodying the invention, failed to attain a sufficient improvement in bending strength, particularly at elevated temperatures. Further, Controls 3, 4, which had different phases from the $Si_3N_4$ sintered masses of the invention, were not fully increased in bending strength.

The foregoing description referred to the case where the $Si_3N_4$ sintered mass was produced by normal temperature sintering. However, it was confirmed that a $Si_3N_4$ mass sintered by the process of hot press or HIP showed greater density and bending strength than the examples of Table 1 above. As mentioned above, this invention can provide a highly reliable silicon nitride sintered mass which indicates great mechanical strength as microscopically determined, for instance, a bending strength of over 70 kg/mm$^2$ (687 MPa) (20 mm span strength test) as tested at 1,200°C. It was further discovered that when sintered under the same conditions as those in which the aforesaid fifteen examples were produced, a mass of $Si_3N_4$-rare earth oxide-$Al_2O_3$-AlN mixed with of $TiO_2$, MgO or $ZrO_2$ in a total amount of less than 5% by weight produced a silicon nitride sintered mass having substantially the same mechanical strength as the examples listed in Table 1 above.

**Claims**

1. A silicon-nitride-sintered mass whose base is prepared from $Si_3N_4$-rare earth oxide-$Al_2O_3$-AlN and whose constituent phases are represented by α'-$Si_3N_4$ and β-$Si_3N_4$, and wherein the volume ratio between both phases is set at 0.05—0.7:0.95—0.3.

2. The silicon-nitride-sintered mass according to claim 1, modified in that the mass of $Si_3N_4$-rare earth oxide-$Al_2O_3$-AlN contains at least one of the group consisting of $TiO_2$, MgO and $ZrO_2$ in a total amount of less than 5% by weight.

3. The silicon-nitride-sintered mass according to claim 1, characterized in that the content of the rare earth oxide is set at 3 to 10% by weight.

4. The silicon-nitride-sintered mass according to claim 1, characterized in that the rare earth oxide is formed of $Y_2O_3$.

5. The silicon-nitride-sintered mass according to claim 1, characterized in that the ratio AlN/$Al_2O_3$ is 3 or more.

6. The silicon-nitride-sintered mass according to claim 1, modified in that the constituent phases are α'-$Si_3N_4$, β-$Si_3N_4$ and a mass of Si-rare earth element-Al-O-N; the volume ratio of the α'-$Si_3N_4$ phase to the whole of all constituent phases being set at 0.01 to 0.07.

**Patentansprüche**

1. Siliziumnitrid-Sintermasse, deren Grundlage aus $Si_3N_4$-Seltenerdeoxid-$Al_2O_3$-AlN zubereitet ist und deren konstituierende Phasen durch α'-$Si_3N_4$ und β-$Si_3N_4$ dargestellt sind, wobei das Volumenverhältnis zwischen beiden Phasen auf 0,05—0,7:0,95—0,3 eingestellt ist.

2. Siliziumnitrid-Sintermasse nach Anspruch 1, die derart modifiziert ist, daß die Masse aus $Si_3N_4$-Seltenerdeoxid-$Al_2O_3$-AlN mindestens einen Bestandteil aus der Gruppe $TiO_2$, MgO und $ZrO_2$ in einer Gesamtmenge von weniger als 5 Gew.-% enthält.

3. Siliziumnitrid-Sintermasse nach Anspruch 1, dadurch gekennzeichnet, daß der Gehalt an Seltenerdeoxid auf 3—10 Gew.-% eingestellt ist.

4. Siliziumnitrid-Sintermasse nach Anspruch 1, dadurch gekennzeichnet, daß das Seltenerdeoxid aus $Y_2O_3$ besteht.

5. Siliziumnitrid-Sintermasse nach Anspruch 1, dadurch gekennzeichnet, daß das Verhältnis AlN/$Al_2O_3$ 3 oder mehr beträgt.

6. Siliziumnitrid-Sintermasse nach Anspruch 1, die derart modifiziert ist, daß die konstituierenden Phasen α'-$Si_3N_4$, β-$Si_3N_4$ und eine Masse aus Si-Seltenerdeelement-Al-O-N sind, wobei das Volumenverhältnis der α'-$Si_3N_4$-Phase zur Gesamtheit sämtlicher konstituierender Phasen auf 0,01 bis 0,07 eingestellt ist.

**Revendications**

1. Une masse frittée de nitrure de siliciùm, caractérisée en ce que sa base est préparée à partir de

$Si_3N_4$-oxyde des terres rares-$Al_2O_3$-AlN, les phases qui la constituent sont représentée par α'-$Si_3N_4$ et β-$Si_3N_4$, et le rapport en volume entre ces deux phases est fixé à 0,05—0,7:0,95—0,3.

2. La masse frittée de nitrure de silicium selon la revendication 1, caractérisée en ce que la masse de $Si_3N_4$-oxyde des terres rares-$Al_2O_3$-AlN contient au moins un composé du groupe comprenant $TiO_2$, MgO et $ZrO_2$, en quantité totale inférieure à 5% en poids.

3. La masse frittée de nitrure de silicium selon la revendication 1, caractérisé en ce que la teneur en oxyde des terres rares est fixée à 3 à 10% en poids.

4. La masse frittée de nitrure de silicium selon la revendication 1, caractérisé en ce que l'oxyde des terres rares est formé de $Y_2O_3$.

5. La masse frittée de nitrure de silicium selon la revendication 1, caractérisée en ce que le rapport AlN/$Al_2O_3$ est égal à 3 ou plus.

6. La masse frittée de nitrure de silicium selon la revendication 1, caractérisée en ce que les phases constitutives sont α'-$Si_3N_4$, β-$Si_3N_4$ et une masse de Si-élément des terres rares-Al-O-N, le rapport en volume de la phase α'-$Si_3N_4$ à la totalité de toutes les phases constitutives est fixé à 0,01 à 0,07.

F I G. 1

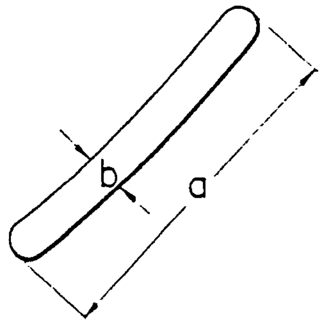
b
a

F I G. 2

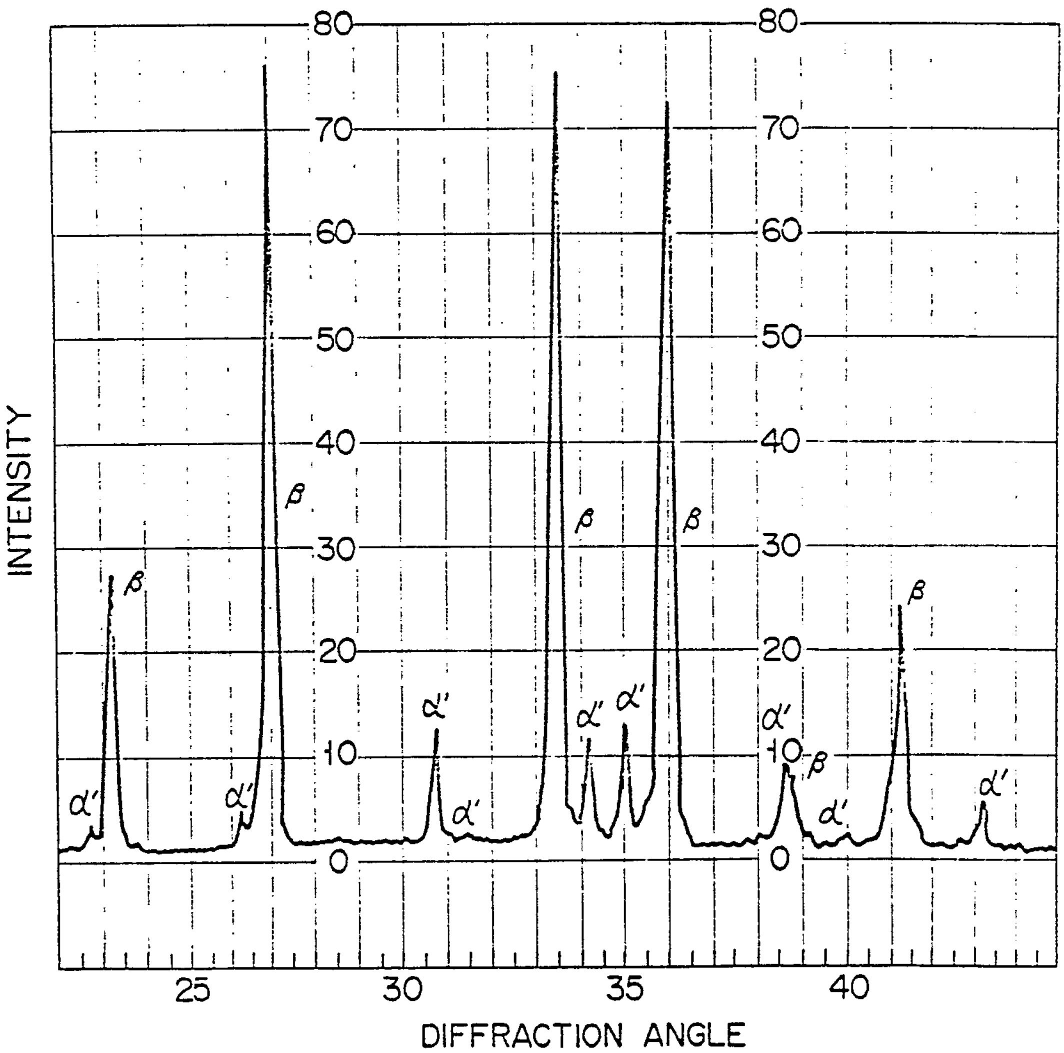
INTENSITY
80
70
60
50
40
30
20
10
0
β
α′
25
30
35
40
DIFFRACTION ANGLE

F I G. 3

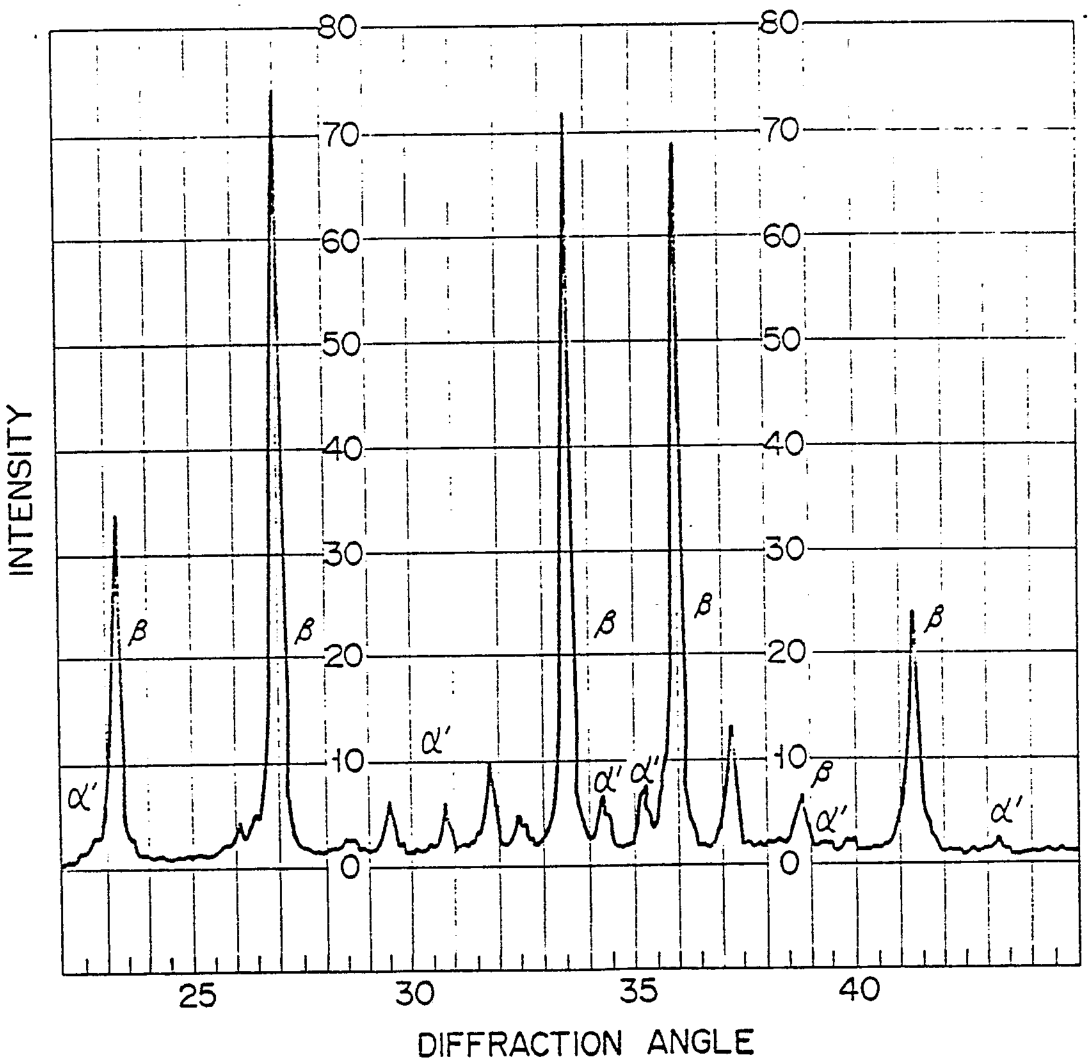
80
70
60
50
40
30
20
10
0
INTENSITY
α'
β
α'
β
α'
α'
β
β
α'
β
α'
β
α'
25
30
35
40
DIFFRACTION ANGLE